Europäisches Patentamt

European Patent Office

Office européen des brevets

(11) Publication number: **0 348 090**
**A1**

## EUROPEAN PATENT APPLICATION

(21) Application number: **89305986.5**

(22) Date of filing: **13.06.89**

(51) Int. Cl.⁴: **H04N 1/21 , H04N 1/46**

(30) Priority: **22.06.88 JP 154313/88**

(43) Date of publication of application:
**27.12.89 Bulletin 89/52**

(84) Designated Contracting States:
**DE GB**

(71) Applicant: **KONICA CORPORATION**
**No. 26-2, Nishishinjuku 1-chome Shinjuku-ku Tokyo(JP)**

(72) Inventor: **Hattori, Tsuyoshi**
**c/o Konica Corporation 1, Sakuramachi Hino-shi Tokyo(JP)**
Inventor: **Tanaka, Masanao**
**c/o Konica Corporation 1, Sakuramachi Hino-shi Tokyo(JP)**
Inventor: **Matsuzaka, Syoji**
**c/o Konica Corporation 1, Sakuramachi Hino-shi Tokyo(JP)**

(74) Representative: **Wood, Anthony Charles et al Urquhart-Dykes & Lord 91 Wimpole Street London W1M 8AH(GB)**

(54) Color image inputting system and apparatus therefor.

(57) Disclosed is a color image inputting system for inputting images on a light-sensitive material by scanning the images, which comprises a rewritable recording device for recording (14) a look up table (10B,10G,10R) for image data conversion and a device (11), built-in or provided outside of the apparatus, for rewriting the look up table (10B,10G,10R) stored in the rewritable recording device. Disclosed is also an apparatus used for the system.

According to this invention, it is possible to provide a color image inputting apparatus which can easily take in, as image data appropriately converted in characteristics, various original images having different characteristics and can directly output the image data converted in characteristics to various outputting apparatuses.

FIG. 1

## Color image inputting system and apparatus therefor

### BACKGROUND OF THE INVENTION

This invention relates to a color image inputting system and apparatus therefor, more particularly to a color image inputting system having a scanning type image inputting device which inputs images on a light-sensitive material by scanning an optical beam on a surface of the light-sensitive material and apparatus therefor.

In the prior art, there have been well known a method in which images are input by use of so-called scanning type image inputting apparatus which scans an optical beam on a surface of a light-sensitive material.

In this method, image inputting is carried out by scanning optical beams on the surface of the light-sensitive material, detecting the reflected or transferred light, and taking in the detected information as a color image data resolved in three colors of B, G and R. Here, the scanning may be made by moving light or a light-sensitive material, and it means relative movement of light to the light-sensitive material.

The color image data taken in the image inputting apparatus are directly output to various image outputting apparatuses such as a printer.

In the above method, for conducting outputs of high image quality, it is necessary to conduct a conversion of image data corresponding to the characteristics of the light-sensitive material which is an information source to be input, a conversion of image data corresponding to the characteristics of the image outputting apparatus, compression of image data, a conversion of inputting concentration range, etc. In the prior art, these processes have been made by using a computer or ROM (read only memory) look up table for conversion. However, the system using a computer which conducts such image data conversion has a problem that the system itself is expensive and becomes larger. The method using a look up table has a problem that, where a new table is required, the preparation of the table is troublesome and thus it makes a rapid dealing difficult. Also, in both methods, image data input in the image inputting apparatus are required to be output to the image outputting apparatus as a converted image data after being subjected to the conversion of the image data by use of an apparatus having converting function mentioned above, or required to be output to a special image outputting apparatus equipped with an apparatus having a converting function mentioned above. Accordingly, the image data cannot be directly output to general image outputting apparatus having no image data converting function.

### SUMMARY OF THE INVENTION

An object of this invention is to provide a color image inputting apparatus which can easily take in, as image data appropriately converted in characteristics, various original images having different characteristics and can directly output the image data converted in characteristics to various outputting apparatuses, taking account of the above-mentioned conventional problems.

The color image inputting system of this invention is a color image inputting system for inputting images on a light-sensitive material by scanning the images, which comprises a rewritable recording means for recording a look up table for image data conversion and an interface for conducting connection with an outer signal for rewriting the look up table stored in the rewritable recording means.

The color image inputting system of this invention is also a color image inputting system for inputting images on a light-sensitive material by scanning the images, which comprises a rewritable recording means for recording a look up table for image data conversion and a computer connected to the rewritable recording means for rewriting the look up table stored in the rewritable recording means.

The computer used in the apparatus of this invention can be made smaller and more inexpensive than those used for image data conversion as it is used only for rewriting the table.

### BRIEF DESCRIPTION OF THE DRAWINGS

Fig. 1 is a block diagram of a color image inputting system of an example according to this invention;

Fig. 2 is a block diagram of a color image inputting system of another example according to this invention; and

Fig. 3 is a block diagram showing an embodiment of an outputting system for this invention.

### DETAILED DESCRIPTION OF THE PREFERRED EMBODIMENTS

Hereinafter, the examples of this invention will be described in detail by referring the drawings attached.

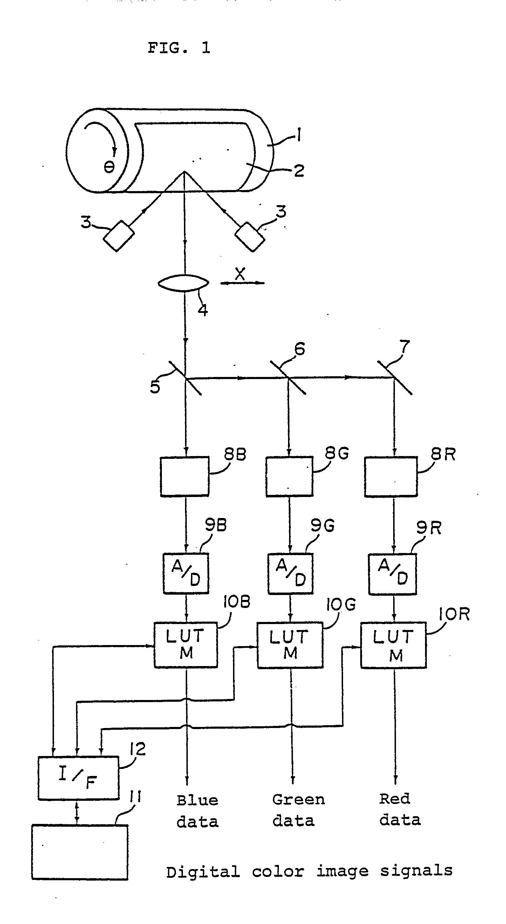

Fig. 1 is a block diagram showing a color image inputting system of an example according to this invention. An original image 2 rolled around a rotatable drum 1 is irradiated with a light from a light source 3 and the reflected light is focused through a lens 4. The drum 1 is rotated in a constant speed in the direction of arrow θ (primary scanning) and concurrently the lens 4 is moved in the direction of arrow X (secondary scanning), and whereby scanning on the original image 2 is carried out.

The light focused through the lens 4 enters into a half mirror 5. A part of the light passes through the half mirror 5 and then enters into a blue-light detector 8B, and the remaining light is changed in optical axis by the half mirror 5 to the side of a half mirror 6. Then, in the half mirror 6, a part of the light is changed in optical axis to the side of a green-light detector 8G, and the remaining light passes through the half mirror 6 and enters into a reflection mirror 7 and further changed in optical axis to the side of a red-light detector 8R by the reflection mirror 7.

The light input into the blue-light detector 8B is subjected to the detection of the blue-light component thereof, and similarly in the green-light detector 8G, the green-light component, and, in the red-light detector 8R, the red-light component, respectively.

The data detected in the detectors 8B, 8G and 8R are each subjected to light dose adjustment and then A/D conversion in A/D convertors 9B, 9G and 9R, and transferred to recording means 10B, 10G and 10R.

The recording means 10B, 10G and 10R each record look up tables (hereinafter, referred to as LUT) for image data conversion, and necessary image data conversion is carried out in the recording means, and the blue-data, green-data and red-data having been converted in data are taken in as a digital color image signal.

As the recording means 10B, 10G and 10R, there may be used a rewritable random access memory (RAM).

In instance where the characteristics of the inputting images or the outputting apparatus are required to be changed and whereby LUTs of the recording means 10B, 10G and 10R are required to be rewritten for carrying out image data conversion corresponding to the change of the characteristics, it can easily be conducted by using, for example, a small-type personal computer 11 connected to the LUT through an interface 12 with rapid processing.

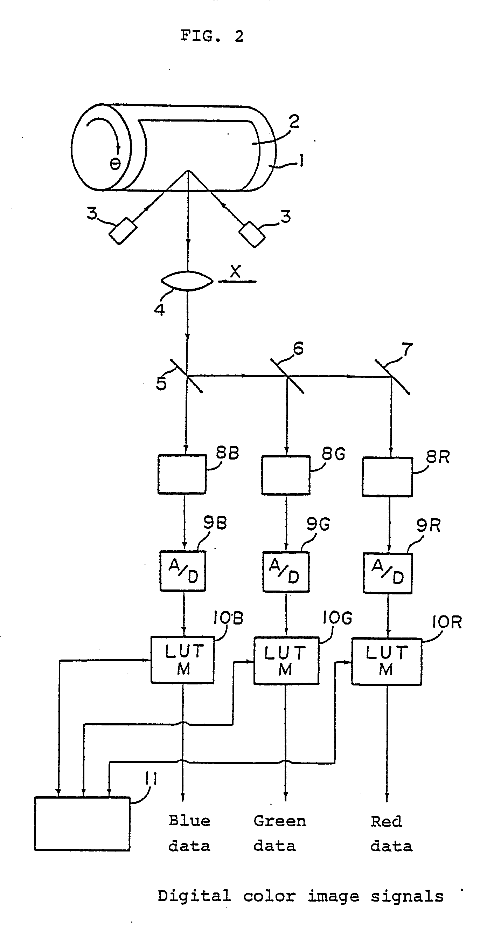

Fig. 2 is a block diagram showing a color image inputting system of another example according to this invention. The same portions of the drawing as in Fig. 1 are denoted by the same numerals as in Fig. 1 for omitting the overlap of explanation.

In Fig. 1, the system of this invention is constituted to have a structure where the personal computer 11 is located outside the system and connected thereto. However, as shown in Fig. 2, in this example, such a system may be constituted so that a personal computer 11 is provided in the system so as to be directly connected to the recording means 10B, 10G and 10R.

In place of the personal computer, those being small, inexpensive and easy in handling, for example, a micro computer and the like may be used.

The input color image data converted in characteristics and taken into in the above manner can be directly output to various image outputting apparatuses and may be output to a medium such as a magnetic tape (MT).

The image data for outputting from the image inputting apparatus of this invention is converted on the .basis of characteristics of the outputting apparatus, whereby outputting with high image quality is enabled. The higher the input image quality is, the more important such advantage is. In this aspect, light-sensitive silver halide photographic materials are preferable as the light-sensitive material to be used as an inputting source.

For example, in the case where the outputting on a color paper for photography is carried out by means of an image outputting apparatus comprising a scanning type exposure device which has lasers of three colors, B, G and R, as a light source, good images can be obtained even if the input images are of color negative films or color reversal films, by carrying out conversion in the inputting apparatus of this invention taking account of the characteristics of these inputting images and characteristics of the color papers for output.

If the input images are of color negative films whose characteristics are different for each manufacturing company, the present invention can provide appropriate measures to such difference easily. Also, if the characteristics of the color papers for output are changed, rapid countermeasures can be made.

Incidentally, the resolution of the light, which has been made in three components of blue-light, green-light and red-light in the above example, is not limited thereto and may be conducted in desired combination of components of light colors to be resolved and number of components to be resolved.

The system in the above example is constituted so that the reflected light from the original image is taken into and detected. However, the system may be constituted so that the transmitted light of the original image is taken into depending on the kinds of the original image.

Although the scanning method in the above example is conducted by the rotation of the drum and the movement of the lens, the scanning may be carried out by the other methods, for example, a laser scanner, CCD scanner and the like in view of conpactness, rapidness, etc.

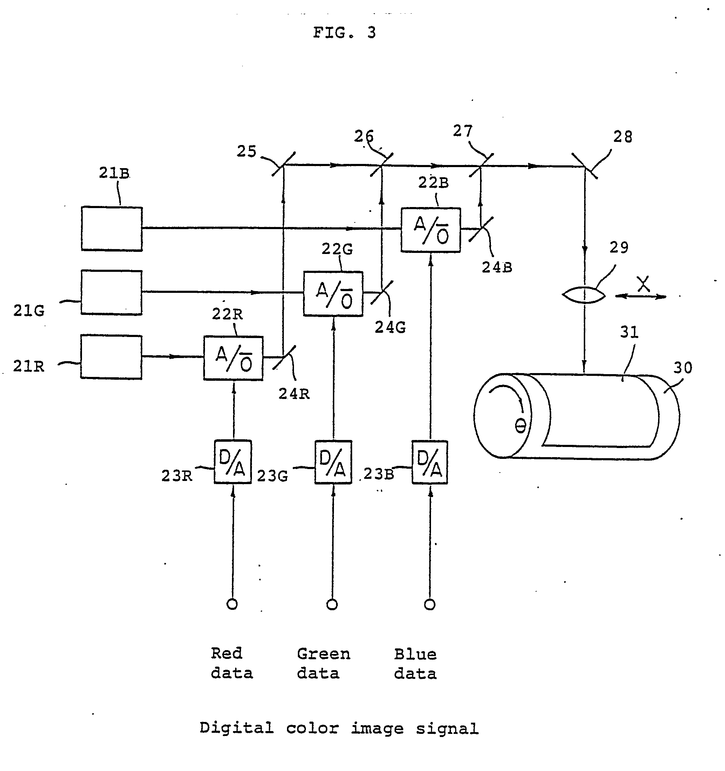

Next, Fig. 3 shows an apparatus used for outputting image data. In this figure, light sources 21B, 21G and 21R are each used for writing blue data, green data and red data of the image data to be output.

The optical beams irradiated from the light sources 21B, 21G and 21R are subjected to beam intensity modulation in optical modulators 22B, 22G and 22R, respectively, corresponding to the digital color image signals resolved in three colors, i.e. blue data, green data and red data.

The above-mentioned blue data, green data and red data are each subjected to D/A conversion in D/A converters 23B, 23G and 23R and transferred to optical modulators 22B, 22G and 22R, respectively.

The optical beams of each color modulated by the optical modulators 22B, 22G and 22R are changed in optical axis by means of mirrors 24B, 24G and 24R. The optical beam reflected by the mirror 24R is changed in optical axis to the side of a dichromic mirror 26 through a mirror 25, and synthesized by a dichromic mirror 26 with the reflected beam from the mirror 24G. The optical beam synthesized by these mirrors is changed in optical axis by a mirror 28, focused through a mirror 29 and irradiated on a light-sensitive color material 31 rolled around a drum 30.

The drum 30 is rotated in a constant speed in the direction of θ (primary scanning) and concurrently the lens 29 is moved in the direction of arrow X (secondary scanning), and whereby image printing is carried out on the light-sensitive color material 31.

Example 1

Original images of a color negative film were input into the image inputting apparatus shown in Fig. 1 or 2 and directly output to a photographic color paper by means of a scanning type exposure device shown in Fig. 3 which comprises three lasers, He-Cd laser as a blue-light source, Ar laser as a green-light source and He-Ne laser as a red-light source. In both cases, the input images were subjected to image data conversion by preparing LUT for image data conversion in the personal computer 11 based on the characteristics of the color negative films used for inputting and the photographic color papers used for outputting, and rewriting the recording means 10B, 10G and 10R. The thus converted image data are then transferred to the outputting apparatus, whereby obtained were images with good image quality in both cases using the apparatuses shown in Figs. 1 and 2.

Example 2

The procedure in Example 1 was repeated provided that a color reversal film was used as original image source, whereby obtained was images with good image quality in both cases using the apparatuses shown in Figs. 1 and 2.

Example 3

The procedure in Example 1 was repeated using a color negative film as an image inputting source provided that a recipe of the developing solution was change and whereby the gradation characteristics was also changed. However, the images with good image quality were obtained by rewriting the LUTs in both cases using the apparatuses shown in Figs. 1 and 2.

Example 4

The procedure in Example 1 was repeated provided that the photographic color paper for outputting was different from that used in Example 1. However, images with good image quality was obtained by rewriting the LUTs in both cases using the apparatuses shown in Figs. 1 and 2.

As described above in detail, the color image inputting system of this invention has a construction that the rewritable recording means for recording LUT for image data conversion and those, such as a small personal computer, for rewriting LUT are built-in or being connected from the outside, and whereby rewriting of the LUT can be simply and speedily conducted corresponding to the image characteristics to be input, characteristics of the outputting apparatus and the like. Accordingly, desirably converted images can be prepared when image inputting is made and whereby the system can be made small and low cost. As a result, image data converted in characteristics can be directly output to various image outputting apparatuses.

## Claims

1. A color image inputting system for inputting images on a light-sensitive material by scanning the images, which comprises a rewritable recording means for recording a look up table for image data conversion and an interface for conducting connection with an outer signal for rewriting the look up table stored in the rewritable recording means.

2. The color image inputting system according to Claim 1, wherein the outer signal is a signal from a computer.

3. The color image inputting system according to Claim 1, wherein the rewritable recording means is a random access memory.

4. A color image inputting system for inputting images on a light-sensitive material by scanning the images which comprises a rewritable recording means for recording a look up table for image data conversion and a computer connected to the rewritable recording means for rewriting the look up table stored in the rewritable recording means.

5. The color image inputting system according to Claim 4, wherein the rewritable recording means is a random access memory.

6. A color image inputting apparatus, which comprises a scanning type image inputting device for inputting images on a light-sensitive material by scanning, a rewritable recording means for recording a look up table for image data conversion and an interface for conducting connection with an outer signal for rewriting the look up table stored in the rewritable recording means.

7. The color image inputting apparatus according to Claim 6, wherein the outer signal is a signal from a computer.

8. The color image inputting system according to Claim 6, wherein the rewritable recording means is a random access memory.

9. A color image inputting apparatus, which comprises a scanning type image inputting device for inputting images on a light-sensitive material by scanning, a rewritable recording means for recording a look up table for image data conversion and a computer connected to the rewritable recording means for rewriting the look up table stored in the rewritable recording means.

10. The color image inputting system according to Claim 9, wherein the rewritable recording means is a random access memory.

FIG. 1

Blue
data

Green
data

Red
data

Digital color image signals

FIG. 2

Blue
data

Green
data

Red
data

Digital color image signals

FIG. 3

Red
data

Green
data

Blue
data

Digital color image signal

<table>
<tr><td>European Patent Office</td><td>EUROPEAN SEARCH REPORT</td><td>Application number</td></tr>
</table>

## DOCUMENTS CONSIDERED TO BE RELEVANT

EP 89305986.5

| Category | Citation of document with indication, where appropriate, of relevant passages | Relevant to claim | CLASSIFICATION OF THE APPLICATION (Int. Cl.4) |
|---|---|---|---|
| X | US - A - 4 724 489 (OLDERSHAW) * Fig. 1,2,5; column 4 * -- | 1-10 | H 04 N 1/21 H 04 N 1/46 |
| X | US - A - 4 675 746 (TETRICK) * Fig. 1,2; columns 3-5 * -- | 1-10 | |
| A | US - A - 4 710 806 (IWAI) * Fig. 1; column 1, line 22 * -- | 1-10 | |
| A | US - A - 4 633 416 (WALKER) * Fig. 1,5,7; abstract * -- | 1-10 | |
| A | US - A - 4 680 644 (SHIRATO) * Fig. 4,12; column 5 * ---- | 1,3-6, 8-10 | |

**TECHNICAL FIELDS SEARCHED (Int. Cl.4)**

H 04 N 1/00
G 03 B 27/00

The present search report has been drawn up for all claims

| Place of search | Date of completion of the search | Examiner |
|---|---|---|
| VIENNA | 30-08-1989 | KRAL |

EPO Form 1503 03 82

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document